# EUROPEAN PATENT SPECIFICATION

(11) **EP 1 467 831 B1**
(45) Date of publication and mention of the grant of the patent: **11.10.2006**
(21) Application number: 02792167.5
(22) Date of filing: 23.12.2002
(51) Int. Cl.: B23D 51/18, B23D 51/20, B25D 9/14, B25D 9/00

(54) **PRESSURE FLUID OPERATED TOOL**
DRUCKMITTELBETÄTIGTES WERKZEUG
OUTIL ACTIONNE PAR LA PRESSION D'UN FLUIDE

(30) Priority: 28.12.2001 SE 0104439
(43) Date of publication of application: 20.10.2004
(73) Proprietor: MK-Produkter, Mekanik & Kemi AB, 183 21 Täby (SE)
(72) Inventor: NILSSON, Roger, S-187 45 Täby (SE)
(74) Representative: Eriksson, Kjell
(86) International application number: PCT/SE2002/002446
(87) International publication number: WO 2003/061888

(56) References cited:
- US-A- 4 117 764
- US-A- 5 615 746
- US-A- 6 006 435
- US-A- 6 065 216

## Description

### Technical Field of the Invention

The present invention relates to a pressure fluid operated tool having an essentially linear, reciprocating working motion, preferably intended for sawing in different materials, e.g. metal and plastic, but useful also for filing or other working operations that may be performed with the working motion in question, said tool comprising a tool housing, a driving mechanism provided in the housing, said driving mechanism comprising a working means, a balancing means, at least one sealing means that cooperates with portions of the working means and the balancing means to define a pressure chamber, springs, fastening means for receiving a machining means and means for supply of pressure medium to the driving mechanism, said working means and balancing means being arranged to alternately move to and from each other, that the working means and the balancing means move away from each other by actuation from a pressure fluid supplied to the pressure chamber, and that the working means and the balancing means move in direction towards each other by actuation from the springs (see for example US-A-6 006 435).

### Prior Art

A known and preferred way to achieve such a motion is to provide a working means and a balancing means, cooperating with the working means, in order to create a pressure chamber between said means, said pressure chamber in quick succession receiving and discharging pressure medium. When the pressure chamber is filled the pressure fluid applies a separating motion to both means and when the pressure chamber is emptied a return motion is performed where the means approach each other. During the separating motion the springs at remote ends of the means are compressed and the springs then yield the accumulated energy to said means to effect said return motion. The mass balancing that is achieved by the motion of the two means from and to each other brings about that a tool having a motion mechanism of the type described above will work kickless and at a low vibration level. The cautious working mode also means a decreased noise level and a decreased wear on parts included in the tool.

In SE 501 449 and SE 510 057 examples are described of known mass balancing mechanisms of the type defined above. A partly different mass balancing mechanism is described in SE 460 349. The latter mechanism is balanced by having the pressure fluid constantly actuating the balancing means in a direction towards the working means and that forces in the opposite direction are applied by two springs acting in the same direction, said springs alternately being compressed and released.

The known mechanisms are designed to provide an impact action on a work piece, this being effected by means of a machining tool, e.g. a chisel to remove slag or the like from said work piece. For this purpose the working means is provided at a front portion of the mechanism, in front of the balancing means, since the largest impact force is achieved in connection with the motion of the working means that is generated by the application of the pressure fluid, said motion in this case being directed forward.

### Objects and Features of the Invention

A primary object of the present invention is to present a pressure fluid operated tool of the type defined above, said tool in principle working kickless. This object can be achieved by a pressure fluid operated tool according to claim 1. This object is realised by the present invention by using the known principle of mass balancing in a new and different way to achieve a working motion that is especially suitable for sawing or the like. The chosen solution implies to provide an elongated working means in the housing that surrounds the driving mechanism, said working means, by a rear, thicker portion, defining a rear partition for a pressure chamber provided in a rear part of the housing. A thinner portion of said working means extends to the front end of the housing where the working means is terminated by fastening means for a saw blade or the like. The thinner portion extends through a balancing means provided in front of said thicker portion, said balancing means being movably journalled on the thinner portion from a point behind the fastening means and backwards towards the thicker portion of the working means where the balancing means defines a front end wall of the pressure chamber that also is sealed radially in a necessary way.

By the described arrangement of the working means and the balancing means an inverted situation is provided compared to the prior art since the working means achieves its largest effect during its movement backwards, said movement being generated by the pressure fluid in accordance with the present invention. This may be utilised in a preferred way by providing a saw blade in the working means, said saw blade having such a toothing that its substantial work is performed during the movement backwards of the working means, this being a pulling movement upon the saw blade. This is of great importance since when exerting a pulling movement upon the blade it is possible to apply a larger load, compared to a pushing movement, without running the risk of a break or a bending. Thereby, an essential increase in the accomplishing ability is achieved. This is also applicable in connection with filing since the providing of the toothing is of importance also in such operations. The decrease in stress upon the saw blade, implied by the pulling movement, makes it possible to apply a longer movement upon the blade than is possible in connection with a pushing movement. This also contributes to an increase in the accomplishing ability.

The fact that the mass balancing mechanism according to the invention works kickfree means that it is not necessary to apply the tool housing against a supporting surface and maintain it pressed against said surface during the entire working operation, but it is possible to hold it in position only by the hands after a saw cut has been defined. This is completely impossible in connection with sawing machines on the market place that performs a reciprocating movement, said machines not being balanced as regards the mass. This is a restriction if suitable support surfaces are not available within a useful distance from the location where a saw cut is to be effected.

A further benefit of the arrangement described above of the working means is achieved by designing its thinner portion as an elongated shaft extending through the balancing means that is movably journalled on said shaft that supports both said balancing means as well as the stationary thicker portion and extends to forward and rear bearings located in front of the balance means and behind the thin part of the thicker portion respectively. Thereby, it is achieved that both the thicker portion of the working means as well as the balancing means on one hand align perfectly relative to each other in connection with their movements to and from each other, this generating no oblique or radial vibrations, and on the other hand may be designed with their circumferential surfaces located with a play relative to the inner side of the surrounding housing. This further contributes to the restriction as regards transferring of such vibrations to the housing and then to the hand of an operator of the tool.

The benefits mentioned above are achieved by means of a pressure fluid operated tool according to the present invention that has been given the features of the appending claims.

### Brief Description of the Drawings

An embodiment of the invention will be described more in detail below, reference being made to the enclosed drawing, where:
- Figure 1: shows a perspective view; and
- Figure 2: shows a sectioned side view of an embodiment of a tool according to the present invention.

### Detailed Description of a Preferred Embodiment of the Invention

In the drawing 1 designates the tool housing in its entirety, 2 is a front portion and 3 is a rear portion of said housing 1, the rear portion 3 being screwed with the front portion 2. Via a rear end portion 5 a tubular shaft 4 is axially movable in a guiding sleeve 6 that rests against a front end wall 7 of the housing portion 3, said guiding sleeve 6 being inserted in a boring 9 of the housing portion via a guiding pin 8. Between the guiding sleeve 6 and the shaft portion 5 a sealing ring 10 is provided. The guiding sleeve 6 is urged against the end wall 7 by one end of a rear spring 11 that by its opposite end urges against a driving plate 12 that is fixed on the shaft 4, said driving plate 12 having a longer circumference length than the elongated portion 4.

A front end portion 13 of the shaft 4 is axially movable in a bushing 14 that is provided inside the front housing portion 2, an enlarged portion 15 of said bushing 14 abutting against a shoulder 16 in said portion. The bushing 14 is urged against the shoulder 16 by one end of a front spring 17, the other end of said front spring 17 urging against a shoulder 18 of a balancing means 19 that has a through-going hole 47 and is axially movable on the shaft 4. Between an end surface 20 of the balancing means, opposite to the shoulder 18, and an end surface 21 of the driving plate 12, said end surface 21 facing the balancing means, an annular sealing means 22 is provided, said sealing means for instance being an O-ring. The balancing means 19 is provided with a flange 23 having circular cross-section, said flange 23 having a first, inner portion 24 and a second, outer portion 25. The first portion 24 has an inner diameter that is close to the outer diameter of the sealing means 22 while the portion 25 has a somewhat larger inner diameter than the outer diameter of the sealing means 22. In the outer portion 25 a number of radially directed holes 26 are provided. An annular gap 27 is created between the outer circumferential wall 28 and an inner wall 29 of the housing 1. The shaft 4 and the driving plate 12, fixed to the shaft 4, define a working means 39. A pressure chamber 40 is created between cooperating surfaces on this working means 39, the balancing means 19 and the sealing means 22.

In the boring 9 of the rear portion 3 of the housing a valve ball 30 is arranged to seal against a sealing means 31 as well as to be removed from said sealing means 31 that adjusts to the diameter of the boring 9 and rests against the guiding pin 8. The ball 30 may be removed by a piston 32 provided in the rear portion 3 of the housing, said piston 32 being equipped with a sealing means 33. The return of the ball 30 is effected by means of a pressure spring 34 that urges the ball 30 in direction towards the piston 32. A screw 35 keeps the spring 34 in place, said screw 35 being threaded in the housing portion and has a cavity for the spring 34. The piston 32 is controlled by an operating handle 37 that is pivotally journalled on a shaft 38. The boring 9 is equipped with a thread 36 for the connection of a nipple 71 and a hose (not shown) for the supply of pressure fluid, said boring 9 at a rear end transfers into a widened portion 41 that creates a coupling flange 42 for a hose (not shown) for discharge of pressure fluid that is emitted from the pressure chamber 40. Said pressure fluid is supplied to the widened portion 41 via a number of borings 43 through the rear portion 3 of the housing, said borings 43 being located along an imaginary circular line having larger diameter than the boring portion 9 and thus to a major part hidden by said boring portion 9 in the drawing.

The tubular shaft 4 creates a pressure fluid conduit 48 that is open from the rear end portion 5 of the shaft and continues forward through the balancing means 19 and inside the bushing 14 where a plugging 44 of the conduit is effected. The conduit has a first transverse outlet hole 45 for feeding of pressure fluid to a widened portion 46 in the boring 47 of the balancing means 19. Directly before the plugging 44 a second transverse outlet hole 49 is provided in the conduit 48, said outlet hole 49 communicating with the bearing of the shaft 4 in the bushing 14.

In the envelope surface of the shaft 4 two first, opposite flattenings 50, 51 are provided from adjacent the first transverse outlet hole 45 to the area of the end surface 20 of the balancing means and two second, opposite flattenings 52, 53 are provided in the area of the bushing 14. In the latter two screws having planar ends are threaded to immediate vicinity of the flattenings 52, 53 to prevent turning of the working means 39.

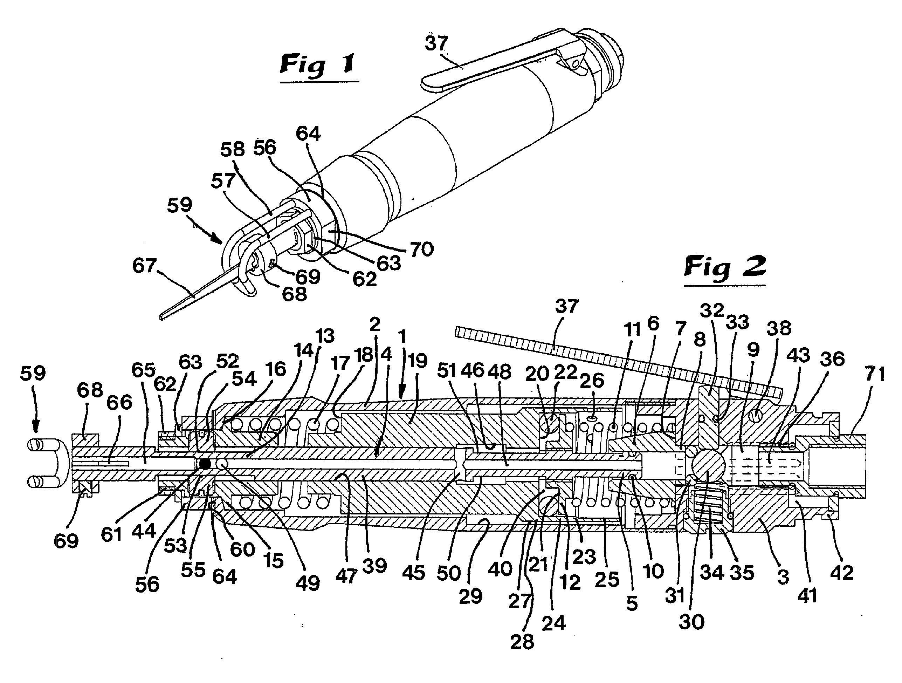

An annular fastening means 56 is covering the bushing 14 and the screws 54, 55, holes being provided in the fastening means 56 for receiving two ends of a yoke 59, see especially Figure 1, for application against a work piece. This facilitates the maintaining of the tool in correct working position. The fastening means 56 is clamped against a front end surface 60 of the front portion 2 of the housing by means of a thread 61 on the bushing 14 and a nut 62 during the interaction of a clamping washer 63. To secure the thread coupling the cup springs 64 are tightened butt against the front end surface 60 and the fastening means 56.

In the front end portion 13 of the shaft 4 a boring 65 is provided up to the plugging 44. The shaft 4 is also provided with a slot 66 having a shorter extension than the boring 65, said slot 66 being intended for the mounting of a saw blade or the like 67 that is clamped in the slot by means of a clip 68 and a stop screw 69.

In the perspective view according to figure 1 the operating handle 37, the yoke 59 and a saw blade 67 are shown in a proper orientation relative to each other while in figure 2 the rear portion 3 of the housing is rotated 90° to show the piston 32 and adherent valve details etc.. The saw blade is omitted in figure 2 to show its fastening slot 66.

The fastening details at the front end of the tool are designed to enable the above mentioned orientation that is shown in figure 1. The way of action is that the shaft 4 with its slot 66 initially is oriented in the bushing 14 by rotating the screws 54, 55 of the bushing to a slight play against the flatennings 52, 53 of the shaft. The shaft then follows the bushing when the latter is oriented relative to the operating handle 37. Then the fastening means 56 is pushed on the bushing, is maintained in correct position by means of a key handle 70 of the fastening means 56 and is tightened against the front portion 2 of the housing by means of the nut 62. Thereby, also the fastening holes of the fastening means 56, said holes being intended for the yoke 59, are oriented in a correct way. A saw blade or the like may be fixed in correct position by means of the clip 68.

The tool according to the present invention functions in the following way: A not shown supply conduit for a pressurised fluid, normally compressed air, is attached by means of a nipple 71 that is screwed into a thread 36 of the boring 9. When the operating handle 37 is pressed downwards and the valve ball 30 is removed, by means of the piston 32, from its sealing abutment against the sealing means 31, the pressure fluid flows past the ball 30, through the guiding sleeve 6 and into the conduit 48. Through the first transverse outlet hole 45 of the conduit 48 pressure fluid flows into the widened portion 46 of the hole 47 that extends through the balancing means 19 and reaches the pressure chamber 40 via the channel that is created between the hole 47 and the first flattenings 50, 51 of the shaft 4.

In the pressure chamber 40 the towards each other facing end surfaces of the balancing means 19 and the driving plate 12 of the working means 39 are affected by the pressure fluid, and the means 19 and 39 start a separating motion. During this first phase of the motion the pressure chamber is sealed by the sealing ring 22 that follows the movement of the working means due to the fact that pressure fluid is urged against the driving plate 12 and simultaneously against the flange 23 of the balancing means. Due to the motion of both means 19 and 39 away from each other the transverse outlet hole 45 of the working means 39 and the flattenings 50, 51 are moved to the right in figure 2, and the widened portion 46 of the hole 47 of the balancing means is moved to the left, until the outlet hole 45 has passed by the widened portion 46 and its orifices have been blocked by a thinner portion of the through-going hole 47 of the balancing means. Since this portion surrounds said outlet 45 with only a slight play the pressure fluid supply to the pressure chamber 40 ceases almost completely. The separating movement continuous further for a short distance and is then transferred to a return movement that is applied by the springs 11, 17. In close connection with the interruption of the supply of pressure fluid to the pressure chamber the return movement is initiated by the sealing ring 22 having followed the movement of the driving plate 12 until the sealing ring 22 has passed beyond the location where the inner portion 24 of the flange 23 of the balancing means conically is transferred to the widened outer portion 25, said portion 25 being equipped with holes 26 a short distance from the transferring portion. The pressure fluid strives to expand the sealing ring 22 to make it maintaining the contact with the flange 23 until it passes the holes 26. When the sealing ring 22 is no longer supported by an unbroken surface but the pressure is spread round the ring 22 via the holes 26, the ring 22 suddenly looses its contact with the flange 23 and the driving plate 12 and is contracted to its nominal size, whereby a large outlet area is achieved in a very short time. This results in a very quick pressure drop and emptying of the pressure chamber 40. The pressure fluid is evacuated on one hand between the sealing ring 22 and the inner side of the flange 23 and on the other hand through the holes 26 and the annular play 27 between the outer side of the flange 23 and the inner wall 29 of the housing 1, said pressure fluid continuing out of the tool via the borings 43.

When the return movement has commenced the sealing ring 22 reassumes its sealing function and after a short distance of the movement the outlet holes 45 in the supply conduit 48 again enter the widened portion 46 of the hole 47 in the balancing means. Again pressure fluid is supplied to the pressure chamber 40 and a new separating motion is commenced.

The sealing ring 22, that in connection with the pressure drop reassumed its nominal size, will not immediately, during the return movement, be stretched to sealing contact with the flange 23 since the space between the sealing ring and the widened portion 25 of the flange brings about that pressure fluid affects the ring on all sides. Therefore, the sealing ring 22 reassumes its sealing function only when it has been returned, by the driving plate 12, to the thinner inner portion 24 of the flange. This means that re-filling of the pressure chamber 40 is commenced only when a smaller distance of the return movement already has taken place.

A prerequisite to effect a long working motion is that also the return motion becomes equal long since otherwise the turning position of the return motion will be displaced to a point closer to the turning position of the working motion. This means that the motions will take place between two points at a distance that will decrease, i.e. with shorter working stroke. It is possible to control the re-filling time to a certain degree and also the length of the return motion, by adaptation of the area of the inlet for pressure fluid to the pressure chamber. Simultaneously there is both a desire to prolong the re-filling time in order to have time for a long return stroke but also the desire of a quick supply of pressure fluid to achieve a quick acceleration of the movable masses and a forceful functional mode. In connection with the arrangement described above of the sealing ring 22 and the flange 23 it is possible to unite both desires since the pressure chamber 40 maintains open during a first phase of the return motion. Thereby, an extra return length is achieved before re-filling of the chamber 40 starts, said re-filling then may take place without the demand of a suitable re-filling velocity. Also the quick emptying of the pressure chamber 40 that has been described above is of importance for a forceful and distinct functional mode, in this case in connection with the turning from working motion to return motion.

The entire working stroke of the working means and the balancing means 39, 19 are divided on respective means in inverse proportion to their weight. A prototype of a tool according to the described embodiment was equipped with a balancing means 19 having about three times the weight of the working means 39. The entire working stroke of the driving mechanism was about 11 mm and the working stroke of the working means 8 mm, this being balanced by a working stroke of the balancing means of good 2,5 mm constituting about a third of the working stroke of the working means. By different mass distribution of the working means and the balancing means it is possible to make considerable changes in the working strokes.

Besides to supply pressure fluid to the first transverse outlet hole 45, as described above, the pressure fluid conduit 48 also supplies pressure fluid to the second transverse outlet hole 49, from which a small continuos leakage of the fluid, and a lubricant carried by the fluid, is effected through the bearing of the shaft 4 in the bushing 14 in order to maintain the bearing lubricated.

As described above an application yoke 59 is provided at the front end of the tool, said yoke 59 being intended to be pressed against a work tool for maintaining the tool in correct position for a working operation and prevent unintended contact with other surfaces than the intended. However, due to the mass balanced motion mechanism of the tool it is possible to hold the tool only by the hands, subsequent to the establishment of a saw cut or the like, this being completely impossible in connection with tools on the market without mass balanced driving mechanisms. This optional working mode that the balanced mechanism brings about is of importance, especially if a suitable supporting surface is not present within a usable distance from the location where an action is to be taken.

The described embodiment constitutes only an example and the variations of the design are feasible within the scope of the claims.

### Feasible Modifications

In the embodiment described above the tubular shaft 4 has a cylindrical cross section. However, within the scope of the present invention it is feasible that at least parts of the tubular shaft has a different cross section. In exemplifying and non-restricting purpose hexagonal or square cross section may be mentioned. It is of course also possible that the tubular part has a hexagonal or a square cross section along its entire length. By using a different cross section than the cylindrical an automatic locking against rotation of the elongated part is achieved.

## Claims

1. Pressure fluid operated tool having an essentially linear, reciprocating working motion, intended for sawing in different materials, e.g. metal and plastic, said tool comprising a tool housing (1), a driving mechanism (11, 17, 19, 39) provided in the housing (1), said driving mechanism (11, 17, 19, 39) comprising a working means (39), a balancing means (19), at least one sealing means (22) that cooperates with portions of the working means (39) and the balancing means (19) to define a pressure chamber (40), springs (11, 17), fastening means (66, 68, 69) for receiving a machining means (67) and means (6, 9, 37, 48, 71) for supply of pressure medium to the driving mechanism (11, 17, 19, 39), said working means (39) and balancing means (19) being arranged to alternately move to and from each other, that the working means (39) and the balancing means (19) move away from each other by actuation from a pressure fluid supplied to the pressure chamber (40), and that the working means (39) and the balancing means (19) move in direction towards each other by actuation from the springs (11, 17), that the working means (39) comprises an elongated portion (4) that extends from a front portion (2) of the tool housing (1) to a rear portion (3) of the tool housing (1), that the elongated portion (4) extends through the balancing means (19) that is axially movable on the elongated portion (4) that in the area of the front portion (2), in front of the balancing means (19), supports the fastening means (66, 68, 69), **characterized in that**, in the area of the rear portion (3) and behind the balancing means (19), the elongated portion (4) supports a driving plate (12) having a longer circumferential length than the elongated portion (4), and that the driving plate (12) cooperates with the balancing means (19) and the sealing means (22) for defining the pressure chamber (40).

2. Tool according to claim 1, **characterized in that** the elongated portion (4) has a substantially cylindrical cross section.

3. Tool according to claim 1 or 2, **characterized in that** a radial play is designed between the balancing means (19) and inner walls (29) of the tool housing (1).

4. Tool according to any of the previous claims,
**characterized in that** the elongated portion (4) has an internal, axially extending pressure fluid conduit (48) having a first outlet opening (45) for transfer of the pressure fluid to the pressure chamber (40) and a second outlet opening (49) to feed a lubricant, included in the pressure fluid, to a bearing (14) of the working means (39), said bearing being provided in the tool housing (1), the feeding being effected by means of a small amount leakage.

5. Tool according to any of the previous claims,
**characterized in that** the balancing means (19) has about three times the mass as the working means (39).

6. Tool according to any of the previous claims,
**characterized in that** the sealing means (22) seals in radial direction and abuts against the driving plate (12) when the balancing means (19) and the working means (39) move in a direction towards each other.

7. Tool according to claim 4, **characterized in that** a plugging (44) is provided in the pressure fluid conduit (48) between a portion that is overlapped by the balancing means (19) and the portion that supports the fastening means (66, 68, 69).

8. Tool according to any of the previous claims,
**characterized in that** the machining means constitutes a saw blade (67).

9. Tool according to claim 8, **characterized in that** the saw blade (67) is received in a slot (66) of the elongated portion (4), and that a yoke (59) surrounds the saw blade (67).

## Patentansprüche

1. Mit einem unter Druck stehenden Fluid betriebenes Werkzeug, welches eine im wesentlichen lineare Hubkolbenarbeitsbewegung aufweist, die dafür vorgesehen ist, in verschiedene Materialien, z.B. Metall und Kunststoff, zu sägen, wobei das Werkzeug ein Werkzeuggehäuse (1), einen Antriebsmechanismus (11, 17, 19, 39), der in dem Gehäuse (1) vorgesehen ist, wobei der Antriebsmechanismus (11, 17, 19, 39) ein Arbeitsmittel (39) aufweist, ein Ausgleichsmittel (19), mindestens ein Dichtmittel (22), welches mit Teilen des Arbeitsmittels (39) und des Ausgleichsmittels (19) so zusammenwirkt, daß eine Druckkammer (40) definiert wird, Federn (11, 17), Befestigungsmittel (66, 68, 69) zum Aufnehmen eines Bearbeitungsmittels (67) und Mittel (6, 9, 37, 38, 48, 71) zum Bereitstellen eines Druckmediums an den Antriebsmechanismus (11, 17, 19, 39) aufweist, wobei das Arbeitsmittel (39) und das Ausgleichsmittel (19) so angeordnet sind, daß sie sich abwechselnd aufeinander zu und voneinander weg bewegen, derart, daß sich das Arbeitsmittel (39) und das Ausgleichsmittel (19), angetrieben durch ein in die Druckkammer (40) geleitetes Druckfluid, voneinander weg bewegen und daß das Arbeitsmittel (39) und das Ausgleichsmittel (19) sich, angetrieben durch die Federn (11, 17), in Richtung aufeinander zu bewegen, wobei das Arbeitsmittel (39) ein längliches Teil (4) aufweist, welches sich von einem vorderen Teil (2) des Werkzeuggehäuses (1) zu einem hinteren Teil (3) des Werkzeuggehäuses (1) erstreckt, wobei sich das längliche Teil (4) durch das Ausgleichsmittel (19) hindurch erstreckt, welches axial auf dem länglichen Teil (4) bewegbar ist, welches in dem Bereich des vorderen Teils (2) vor dem Ausgleichsmittel (19) die Befestigungsmittel (66, 68, 69) unterstützt, **dadurch gekennzeichnet, daß** das längliche Teil (4) in dem Bereich des hinteren Teils (3) und hinter dem Ausgleichsmittel (19) eine Antriebsplatte (12) unterstützt, welche eine größere Umfangslänge aufweist als das längliche Teil (4), und daß die Antriebsplatte (12) mit dem Ausgleichsmittel (19) und dem Dichtmittel (22) zum Definieren der Druckkammer (40) zusammenwirkt.

2. Werkzeug nach Anspruch 1, **dadurch gekennzeichnet, daß** das längliche Teil (4) einen im wesentlichen zylindrischen Querschnitt aufweist.

3. Werkzeug nach Anspruch 1 oder 2, **dadurch gekennzeichnet, daß** ein radiales Spiel zwischen dem Ausgleichsmittel (19) und den Innenwänden (29) des Werkzeuggehäuses (1 ) vorgesehen ist.

4. Werkzeug nach einem der vorhergehenden Ansprüche, **dadurch gekennzeichnet, daß** der gestreckte Teil (4) eine innere, sich axial erstreckende Flüssigkeitsdruckleitung (48) aufweist, die eine erste Auslaßöffnung (45) zum Übertragen der Druckflüssigkeit in die Druckkammer (40) aufweist und eine zweite Auslaßöffnung (49), um ein Schmiermittel, welches in der Druckflüssigkeit vorhanden ist, einem Lager (14) des Arbeitsmittels (39) zuzuführen, wobei das Lager in dem Werkzeuggehäuse (1) vorgesehen ist und wobei die Zuführung mit Hilfe einer kleinen Menge an Leckage bewirkt wird.

5. Werkzeug nach einem der vorhergehenden Ansprüche, **dadurch gekennzeichnet, daß** das Ausgleichsmittel (19) ungefähr die dreifache Masse des Arbeitsmittels (39) aufweist.

6. Werkzeug nach einem der vorhergehenden Ansprüche, **dadurch gekennzeichnet, daß** das Dichtmittel (22) in radialer Richtung dichtet und an die Antriebsplatte (12) angrenzt, wenn das Ausgleichsmittel (19) und das Arbeitsmittel (39) sich in einer Richtung auf einander zu bewegen.

7. Werkzeug nach Anspruch 4, **dadurch gekennzeichnet, daß** ein Stopfen (44) in der Flüssigkeitsdruckleitung (48) zwischen einem Teil, welcher von dem Ausgleichsmittel (19) überlappt ist und dem Teil, welcher die Befestigungsmittel (66, 68, 69) trägt, vorgesehen ist.

8. Werkzeug nach einem der vorhergehenden Ansprüche, **dadurch gekennzeichnet, daß** das Bearbeitungsmittel ein Sägeblatt (67) bildet.

9. Werkzeug nach Anspruch 8, **dadurch gekennzeichnet, daß** das Sägeblatt (67) in einem Schlitz (66) des länglichen Teils (4) aufgenommen ist und daß ein Bügel (59) das Sägeblatt (67) umgibt.

## Revendications

1. Outil actionné par un fluide sous pression ayant un mouvement de travail en va-et-vient essentiellement linéaire, destiné à scier différents matériaux, par exemple, le métal et le plastique, ledit outil comprenant un boîtier d'outil (1), un mécanisme d'entraînement (11, 17, 19, 39) fourni dans le boîtier (1), ledit mécanisme d'entraînement (11, 17, 19, 39) comprenant un moyen de travail (39), un moyen d'équilibrage (19), au moins un moyen d'étanchéité (22) qui coopère avec des parties du moyen de travail (39) et du moyen d'équilibrage (19) pour définir une chambre de pression (40), des ressorts (11, 17), des moyens de fixation (66, 68, 69) destinés à recevoir un moyen d'usinage (67) et des moyens (6, 9, 37, 48, 71) destinés à l'alimentation d'un milieu sous pression au mécanisme d'entraînement (11, 17, 19, 39), ledit moyen de travail (39) et ledit moyen d'équilibrage (19) étant agencés pour se déplacer en un mouvement de va-et-vient pour s'approcher et s'éloigner l'un de l'autre, **caractérisé en ce que** le moyen de travail (39) et le moyen d'équilibrage (19) se déplacent ou s'éloignent l'un de l'autre grâce à l'actionnement à partir d'un fluide sous pression fourni dans la chambre sous pression (40), et **en ce que** le moyen de travail (39) et le moyen d'équilibrage (19) se déplacent dans une direction qui les rapproche l'un de l'autre grâce à l'actionnement à partir des ressorts (11, 17), **en ce que** le moyen de travail (39) comprend une partie allongée (4) qui s'étend à partir d'une partie avant (2) du boîtier d'outil (1) vers une partie arrière (3) du boîtier d'outil (1), **en ce que** la partie allongée (4) s'étend à travers le moyen d'équilibrage (19), qui peut se déplacer axialement sur la partie allongée (4), **en ce que** la zone de la partie avant (2), devant le moyen d'équilibrage (19), soutient les moyens de fixation (66, 68, 69), **caractérisé en ce que** dans la zone de la partie arrière (3) et derrière le moyen d'équilibrage (19), la partie allongée (4) soutient une plaque d'entraînement (12) ayant une longueur de circonférence supérieure à la partie allongée (4), et **en ce que** la plaque d'entraînement (12) coopère avec le moyen d'équilibrage (19) et le moyen d'étanchéité (22) pour définir la chambre sous pression (40).

2. Outil selon la revendication 1, **caractérisé en ce que** la partie allongée (4) a une section transversale sensiblement cylindrique.

3. Outil selon les revendications 1 ou 2, **caractérisé en ce qu'**un jeu radial est conçu entre le moyen d'équilibrage (19) et les parois internes (29) du boîtier d'outil (1).

4. Outil selon l'une quelconque des revendications précédentes, **caractérisé en ce que** la partie allongée (4) présente un conduit de fluide sous pression interne qui s'étend axialement (48), qui a une première ouverture de sortie (45) pour le transfert du fluide sous pression vers la chambre sous pression (40) et une seconde ouverture de sortie (49) pour alimenter un lubrifiant, inclus dans le fluide sous pression, à un palier (14) du moyen de travail (39), ledit palier étant fourni dans le boîtier d'outil (1), l'alimentation étant effectuée au moyen d'une fuite de petite quantité.

5. Outil selon l'une quelconque des revendications précédentes, **caractérisé en ce que** le moyen d'équilibrage (19) a environ trois fois la masse du moyen de travail (39).

6. Outil selon l'une quelconque des revendications précédentes, **caractérisé en ce que** le moyen d'étanchéité (22) assure une fermeture hermétique dans la direction radiale et bute contre la plaque d'entraînement (12) lorsque le moyen d'équilibrage (19) et le moyen de travail (39) se déplacent dans une direction pour se rapprocher l'un de l'autre.

7. Outil selon la revendication 4, **caractérisé en ce qu'**un bouchon (44) est fourni dans le conduit de fluide sous pression (48) entre une partie qui est chevauchée par le moyen d'équilibrage (19) et la partie qui soutient le moyen de fixation (66, 68, 69).

8. Outil selon l'une quelconque des revendications précédentes, **caractérisé en ce que** le moyen d'usinage constitue une lame de scie (67).

9. Outil selon la revendication 8, **caractérisé en ce que** la lame de scie (67) est reçue dans une fente (66) de la partie allongée (4) et **en ce qu'**un étrier (59) entoure la lame de scie (67).
